# EUROPÄISCHE PATENTSCHRIFT

(11) **EP 2 081 980 B1**
(45) Veröffentlichungstag und Bekanntmachung des Hinweises auf die Patenterteilung: **25.02.2015**
(21) Anmeldenummer: 07818450.4
(22) Anmeldetag: 26.09.2007
(51) Int. Cl.: C08J 3/20, C08L 91/06

(54) **TEMPERATUREMPFINDLICHE WIRKSTOFFZUSAMMENSETZUNGEN ZUR DICHTEVERRINGERUNG IN KUNSTSTOFFEN**
TEMPERATURE-SENSITIVE ACTIVE INGREDIENT COMPOSITIONS FOR REDUCING THE DENSITY OF PLASTICS
COMPOSITIONS DE SUBSTANCES ACTIVES THERMOSENSIBLES UTILISÉES POUR RÉDUIRE LA DENSITÉ DE MATIÈRES PLASTIQUES

(30) Priorität: 30.09.2006 DE 102006046566
(43) Veröffentlichungstag der Anmeldung: 29.07.2009
(73) Patentinhaber: Clariant Finance (BVI) Limited, Road Town, Tortola (VG)
(72) Erfinder: KLING, Reinhold, 86368 Gersthofen (DE); WEGNER, Jan-Erik, 22041 Hamburg (DE)
(74) Vertreter: Hütter, Klaus
(86) Internationale Anmeldenummer: PCT/EP2007/008366
(87) Internationale Veröffentlichungsnummer: WO 2008/037445

(56) Entgegenhaltungen:
- EP-A- 0 260 445
- EP-A- 0 890 584
- WO-A-97/07907
- WO-A-97/16476
- US-A1- 2002 198 122
- US-A1- 2004 214 927
- CLARIANT: LICOCENE GRADES - THE "DESIGNER WAXES", [Online] Juli 2006 (2006-07), Seiten 1-2, XP002461549 Gefunden im Internet: URL:pa.clariant.com/.../DA8400E_0706_FL_Li coceneGrades.pdf/$FILE/DA8400E_0706_FL_Lic oceneGrades.pdf> [gefunden am 2007-12-06]

## Beschreibung

Die vorliegende Erfindung betrifft hoch beladene, temperaturempfindliche Wirkstoffzusammensetzungen, die Treibmittel enthalten, die in Kunststoffen zu einer Dichteverringerung führen.

Kunststoffe werden üblicherweise unter Verwendung von Treibmittelmasterbatches geschäumt. Die im Extrusionsverfahren hergestellten Treibmittelmasterbatches, weisen Treibmittelgehalte im Bereich von 10 bis 75 Gew.-% auf und enthalten oftmals neben einem polymeren Träger einen hohen Anteil von polyolefinischen Wachsen, die den Einarbeitungsprozess der Mittel in die Kunststoffmatrix unterstützen und für eine möglichst gleichmäßige Verteilung der Treibmittel sorgen.

An derartige Konzentrate werden in der Technik hohe Anforderungen gestellt:
Die Treibmittel sollten optimal verteilt sein, die Ausbildung einer möglichst feinen Zellstruktur wird gefordert, der Träger soll optimal mit dem Polymer verträglich sein und vor allem soll ein vorzeitiges Aufschäumen in der Verarbeitungsmaschine verhindert werden.

Für die Herstellung von staubfreien, granulat- und pulverförmigen Treibmittelmasterbatches und -präparationen sind zurzeit folgende einstufige oder mehrstufige Verfahren bekannt.

Oftmals wird eine Kaltmischung, die aus einem geeigneten Polymerträgern, wie Polyethylen, Polypropylen oder Ethylenvinylacetatcopolymer oder ähnlichen Polymeren besteht und zusätzlich Dispergierhilfsmitteln wie Wachse, Fettsäurederivate, Stearate etc. enthalten kann, verwendet. Der Nachteil dieser Polymermischungen ist, dass durch den polymeren Anteil die kritische Massetemperatur der Treibmittel leicht überschritten wird und damit die Zersetzungstemperatur des Treibmittels erreicht bzw. überschritten wird. Die Verträglichkeit zu unterschiedlichen Polymeren ist stark limitiert.

In JP 10212372 wird die Herstellung eines expandierbaren Masterbatches beschrieben, dass aus einem klebefreien Polymer besteht, das durch einen Katalysator hergestellt wird. Der verwendete Katalysator kann ein Verbund von Katalysatoren der Gruppe 4 sein. Der eingesetzte Anteil der expandierbaren Microsphärenprodukte betrug 30 %.

US 5,611,962 bzw. CA 2135600 beschreibt die Herstellung von chemischen Treibmittelkonzentraten auf Basis von Polymeren, deren Schmelzpunkt oberhalb von 149 °C liegt.

US 4,632,942 bzw. EP 0 143 545 beschreibt die Beschaffenheit von Trägerpolymeren zur Herstellung von Treibmittelkonzentraten

EP-A-0 890 584 beschreibt Polypropylen-Homopolymere und Copolymer-Wachse, die durch Polymerisation unter Verwendung von Metallocen-Verbindungen in Gegenwart von Wasserstoff hergestellt wurden.

EP-A-0 260 445 beschreibt modifizierte Polyphenylen-Ether-Harze in Verbindung mit Flammschutzmitteln, Treibmitteln und PE-Wachsen.

US 2002/198 122 A1 und US 2004/214927A1 beschreiben multifunktionelle Farbkonzentrate, die Treibmittel und Wachse enthalten.

Alle bisher in der Praxis eingesetzten Treibmittelpräparationen müssen dann, wenn sie einen hohen Treibmittelgehalt von mehr als 40 % aufweisen, mit einem relativ aufwändigen Prozessequipment wie z.B. einer Unterwassergranulierung hergestellt werden. Durch die hohe Beladung wird nämlich die Strangfestigkeit der produzierten Masterbatche geringer. Stranggranulierungen ist bei Masterbatchfirmen Stand der Technik. Eine Möglichkeit der Verbesserung, wäre theoretisch der Einsatz spezieller Polymere, die leicht fließen, die bei tieferen Temperaturen verarbeitbar sind, um ein vorzeitiges Anspringen des Treibmittels zu vermeiden, und die gut verträglich zu unterschiedlichen Polymeren wären. Polymere, die dieses Eigenschaftsbild aufweisen, haben aber höhere Einstandskosten.

Für die Unterwassergranulierung und die dafür notwendigen Ausrüstungen sind in der Regel größere Produktionsmengen notwendig, um zu wirtschaftlichen Herstellkosten zu kommen. Spezielle, auf individuelle Kundenwünsche abgestimmte Treibmitteln enthaltende Wirkstoffzusammensetzungen sind daher aufwändig und können nicht mit den gleichen, hohen Konzentrationen wie üblich hergestellt werden.

Die Aufgabe der vorliegenden Erfindung bestand darin, Treibmittel enthaltende Wirkstoffzusammensetzungen für die Polymerverarbeitung mit einem möglichst hohen Anteil unterschiedlichster Treibmittel beladen zu können, damit die Herstellung von geschäumten Plastomeren und Elastomeren ökonomisch und ökologisch vorteilhaft mit einer einheitlichen Wirkstoffzusammensetzung oder -präparation bewerkstelligt werden kann und so Produkte von hochwertiger Qualität liefert.

Auf einen polymeren Träger soll dabei weitestgehend verzichtet werden, wodurch zum einen Präparationen mit einem deutlich höheren Wirkmittelsubstanzgehalt möglich sind und zum anderen diese in deutlich mehr verschiedene Polymere, mit unterschiedlicher chemischer Zusammensetzung, als bisher, eingesetzt werden können, da weniger Verträglichkeitsprobleme aufgrund der hohen Beladung vorliegen. Der Wachsträger soll zudem eine leichtere Einarbeitung und Dispergierung in die Polymere ermöglichen, was eine feinere Zellstruktur oder eine einheitlichere Molekular bzw. Molekulargewichtsverteilung zur Folge hat.

Diese Aufgabe wird erfindungsgemäß gelöst, indem die Treibmittelkomponenten in ein Metallocenwachs oder ein Gemisch von Metallocenwachs mit Zieglerwachs oder ein Wachs - Polymergemisch eingearbeitet werden. Metallocenwachse oder Metallocen-Polyolefinwachse sind definitionsgemäß Wachse, die in Gegenwart von Metallocenen als Katalysator hergestellt werden. Die so hergestellte Zusammensetzung wird durch Extrusion zu der erfindungsgemäßen Wirkstoffzusammensetzung compoundiert.

Gegenstand der vorliegenden Erfindung ist somit eine Wirkstoffzusammensetzung enthaltend
i) ein oder mehrere fein verteilte Treibmittel,
ii) ein oder mehrere Metallocen-Polyolefinwachse,
iii) optional ein oder mehrere Wachse ausgewählt aus polaren und unpolaren Nicht-Metallocen-Polyolefinwachsen und
iv) gegebenenfalls ein oder mehrere Homo- und/oder Copolymere des Ethylens und/oder Propylens,
wobei das Treibmittel in einer Menge von wenigstens 5 bis 90 Gew.-% und das Polyolefinwachs ii) zu mindestens 10 Gew.-% in der Zusammensetzung enthalten sind und wobei das Metallocen-Polyolefinwachs ein Copolymerwachs aus Propylen und 0,1 bis 50 Gew.-% Ethylen oder 0,1 bis 50 % mindestens eines verzweigten oder unverzweigten 1-Alkens mit 4 bis 20 C-Atomen mit einem Tropfpunkt (Ring/Kugel) zwischen 80 und 170 °C, bestimmt nach DIN 51801/2, ist, wobei die Wirkstoffzusammensetzung durch Extrusion compoundiert wird,
wobei die Metallocen-Polyolefinwachse eine Schmelzviskosität, gemessen bei einer Temperatur von 170 °C, im Bereich von 40 bis 80 000 mPa·s aufweisen, und wobei alle wachsartigen Bestandteile der Wirksoffzusammensetzung im Temperaturbereich zwischen 80 und 170 °C schmelzen.

Vorzugsweise enthält der Wachsanteil mindestens 50 Gew.-% Polypropylen-Metallocenwachs, bezogen auf das Gewicht des Wachsanteils.

Die erfindungsgemäße Wirkstoffzusammensetzung weist damit einen besonders hohen Treibmittel- und Füllstoffanteil auf, besitzt eine sehr gute Verträglichkeit mit den Einsatzpolymeren und schließt weitestgehend negative Beeinträchtigungen der mechanischen Eigenschaften im Endprodukt aus.

Die Metallocenwachse weisen eine Schmelzviskosität, gemessen bei einer Temperatur von 170 °C, im Bereich von 40 bis 80 000 mPa·s, vorzugsweise von 45 bis 35 000 mPa·s, besonders bevorzugt von 50 bis 10 000 mPa·s auf.

Alle wachsartigen Bestandteile der Wirkstoffzusammensetzung schmelzen im Temperaturbereich zwischen 80 und 170 °C.

Erfindungsgemäß bevorzugte Wirkstoffzusammensetzungen enthalten 5 bis 90 Gew.-%, vorzugsweise 25 bis 85 Gew.-%, eines organischen oder anorganischen Treibmittels und 7 bis 80 Gew.-%, vorzugsweise 7,5 bis 75 Gew.-%, des Metallocen-Polyolefinwachses, 0 bis 30 Gew.-%, vorzugsweise 0,5 bis 25 Gew.-%, eines oder mehrerer Nicht-Metallocenewachse und/oder Homo- und/oder Copolymere des Ethylens und/oder Propylens. Zusätzlich kann die erfindungsgemäße Präparation bei Bedarf noch Füllstoffe oder Additive in einer Menge von 0 bis 30 Gew.-% enthalten, bezogen auf das Gesamtgewicht der Zusammensetzung.

Die in Gegenwart von Metallocen als Katalysator hergestellten Wachse sind Copolymerwachse aus Propylen und 0,1 bis 50 % Ethylen oder 0,1 bis 50 % mindestens eines verzweigten oder unverzweigten 1-Alkens mit 4 bis 20 C-Atomen mit einem Tropfpunkt (Ring/Kugel) zwischen 80 und 170 °C.

Die in Gegenwart von Metallocen als Katalysator hergestellten Metallocenwachse sind weitgehend oder vollkommen amorph und können zusätzlich bei Bedarf polar modifiziert sein. Weitgehend im Sinne der Erfindung bedeutet mindestens 80 wt%, bevorzugt mindestens 90 wt%, besonder bevorzugt mindestens 95 wt%, speziell mindestens 99 wt%.

Als Nicht-Metallocen-Polyolefinwachse sind zum einen besonders Ethylenvinylazetat Wachse mit einem Tropfpunkt zwischen 90 und 120°C, einem Vinylacetatgehalt von 1 bis 30 % und einer Viskosität von 50 bis 3 000 mPa·s, vorzugsweise von 50 bis 1 500 mPa·s, gemessen bei einer Temperatur von 140 °C, als auch unpolare, aber auch polare Nicht-Metallocene-Wachse mit einem Tropfpunkt im Bereich von 90 bis 120°C und einer Viskosität von kleiner als 30 000 mPa·s, vorzugsweise kleiner als 15 000 mPa·s, gemessen bei einer Temperatur von 140 °C, geeignet.

Als Nicht-Metallocen-Polyolefinwachse kommen Homopolymerisate des Ethylens oder höherer 1-Olefine mit 3 bis 10 C-Atomen oder deren Copolymerisate untereinander in Frage. Bevorzugt weisen die Polyolefinwachse eine gewichtsmittlere Molmasse M_{w} zwischen 1000 und 20 000 g/mol und eine zahlenmittlere Molmasse Mₙ zwischen 500 und 15 000 g/mol auf.

Für die Herstellung der erfindungsgemäß verwendeten Metallocen-Polyolefinwachse werden Metallocenverbindungen der Formel I eingesetzt.

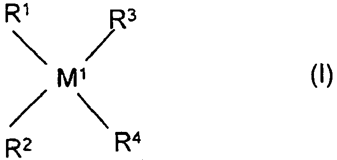

Diese Formel umfasst auch Verbindungen der Formel Ia, 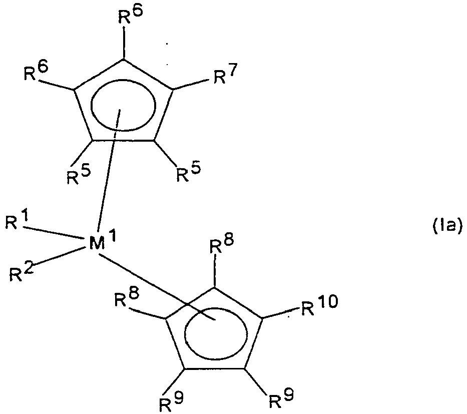 der Formel Ib 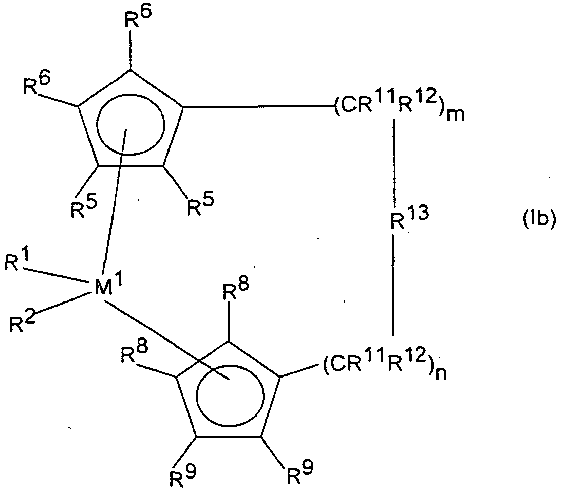 und der Formel Ic

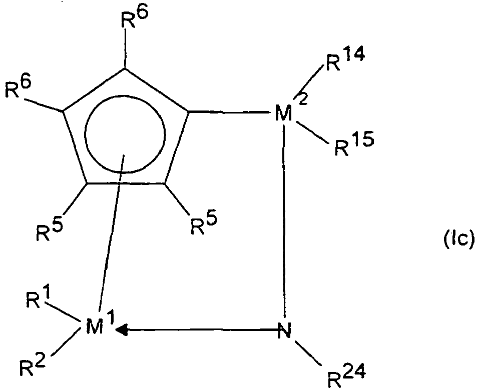

In den Formeln I, la und Ib ist M¹ ein Metall der Gruppe IVb, Vb oder VIb des Periodensystems, beispielsweise Titan, Zirkonium, Hafnium, Vanadium, Niob, Tantal, Chrom, Molybdän, Wolfram, vorzugsweise Titan, Zirkonium, Hafnium.

R¹ und R² sind gleich oder verschieden und bedeuten ein Wasserstoffatom, eine C₁-C₁₀, vorzugsweise C₁-C₃-Alkylgruppe, insbesondere Methyl, eine C₁-C₁₀-, vorzugsweise C₁-C₃-Alkoxygruppe, eine C₆-C₁₀, vorzugsweise C₆-C₈-Arylgruppe, eine C₆-C₁₀-, vorzugsweise C₆-C₈-Aryloxygruppe, eine C₂-C₁₀, vorzugsweise C₂-C₄-Alkenylgruppe, eine C₇-C₄₀-, vorzugsweise C₇-C₁₀)-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogen-, vorzugsweise Chloratom.

R³ und R⁴ sind gleich oder verschieden und bedeuten einen ein- oder mehrkernigen Kohlenwasserstoffrest, welcher mit dem Zentralatom M¹ eine Sandwichstruktur bilden kann. Bevorzugt sind R³ und R⁴ Cyclopentadienyl, Indenyl, Tetrahydroindenyl, Benzoindenyl oder Fluorenyl, wobei die Grundkörper noch zusätzliche Substituenten tragen oder miteinander verbrückt sein können. Außerdem kann einer der Reste R³ und R⁴ ein substituiertes Stickstoffatom sein, wobei R²⁴ die Bedeutung von R¹⁷ hat und vorzugsweise Methyl, tert.-Butyl oder Cyclohexyl ist.

R⁵, R⁶, R⁷, R⁸, R⁹ und R¹⁰ sind gleich oder verschieden und bedeuten ein Wasserstoffatom, ein Halogenatom, vorzugsweise ein Fluor-, Chlor- oder Bromatom, eine C₁-C₁₀-, vorzugsweise C₁-C₄-Alkylgruppe, eine C₆-C₁₀-, vorzugsweise C₆-C₈-Arylgruppe, eine C₁-C₁₀-, vorzugsweise C₁-C₃-Alkoxygruppe, einen -NR¹⁶₂-, -SR¹⁶-, -OSiR¹⁶₃-, -SiR¹⁶₃- oder -PR¹⁶₂-Rest, worin R¹⁶. eine C₁-C₁₀-, vorzugsweise C₁-C₃-Alkylgruppe oder C₆-C₁₀-, vorzugsweise C₆-C₈-Arylgruppe oder im Falle Si oder P enthaltender Reste auch ein Halogenatom, vorzugsweise Chloratom ist oder je zwei benachbarte Reste R⁵, R⁶, R⁷, R⁸, R⁹ oder R¹⁰) bilden mit den sie verbindenden C-Atomen einen Ring. Besonders bevorzugte Liganden sind die substituierten Verbindungen der Grundkörper Cyclopentadienyl, Indenyl, Tetrahydroindenyl, Benzoindenyl oder Fluorenyl.

R¹³ ist

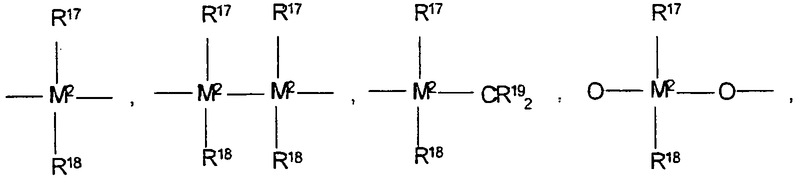

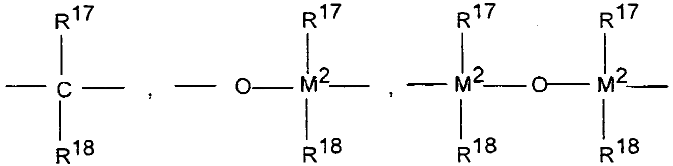

=BR¹⁷, =AIR¹⁷ -Ge-, -Sn-, -O-, -S-, =SO, =SO₂, =NR¹⁷, =CO, =PR¹⁷ oder =P(O)R¹⁷, wobei R¹⁷, R¹⁸ und R¹⁹ gleich oder verschieden sind und ein Wasserstoffatom, ein Halogenatom, vorzugsweise ein Fluor-, Chlor- oder Bromatom, eine C₁-C₃₀-, vorzugsweise C₁-C₄-Alkyl-, insbesondere Methylgruppe, eine C₁-C₁₀-Fluoralkyl-, vorzugsweise CF₃-Gruppe, eine C₆-C₁₀-Fluoraryl-, vorzugsweise Pentafluorphenylgruppe, eine C₆-C₁₀-, vorzugsweise C₆-C₈-Arylgruppe, eine C₁-C₁₀-, vorzugsweise C₁-C₄-Alkoxy-, insbesondere Methoxygruppe, eine C₁₀-C₁₀, vorzugsweise C₂-C₄-Alkenylgruppe, eine C₇-C₄₀-, vorzugsweise C₇-C₁₀-Aralkylgruppe, eine C₈-C₄₀-, vorzugsweise C₈-C₁₂-Arylalkenylgruppe oder eine C₇-C₄₀, vorzugsweise C₇-C₁₂-Alkylarylgruppe bedeuten, oder R¹⁷ und R¹⁸ oder R¹⁷ und R¹⁹ bilden jeweils zusammen mit den sie verbindenden Atomen einen Ring.

M² ist Silizium, Germanium oder Zinn, bevorzugt Silizium und Germanium. R¹³ ist vorzugsweise =CR¹⁷R¹⁸, =SiR¹⁷R¹⁸, =GeR¹⁷R¹⁸, -O-, -S-, =SO, =PR¹⁷ oder =P(O)R¹⁷.

R¹¹ und R¹² sind gleich oder verschieden und haben die für R¹⁷ genannte Bedeutung. m und n sind gleich oder verschieden und bedeuten null, 1 oder 2, bevorzugt null oder 1, wobei m plus n null, 1 oder 2, bevorzugt null oder 1 ist.

R¹⁴ und R¹⁵ haben die Bedeutung von R¹⁷ und R¹⁸.

Beispiele für geeignete Metallocene sind:
Bis(1,2,3-trimethylcyclopentadienyl)zirkoniumdichlorid,
Bis(1,2,4-trimethylcyclopentadienyl)zirkoniumdichlorid,
Bis(1,2-dimethylcyclopentadienyl)zirkoniumdichlorid,
Bis(1,3-dimethylcyclopentadienyl)zirkoniumdichlorid,
Bis(1-methylindenyl)zirkoniumdichlorid,
Bis(1-n-butyl-3-methyl-cyclopentadienyl)zirkoniumdichlorid,
Bis(2-methyl-4,6-di-i.propyl-indenyl)zirkoniumdichforid,
Bis(2-methylindenyl)zirkoniumdichlorid,
Bis(4-methylindenyl)zirkoniumdichlorid,
Bis(5-methylindenyl)zirkoniumdichlorid,
Bis(alkylcyclopentadienyl)zirkoniumdichlorid,
Bis(alkylindenyl)zirkoniumdichlorid,
Bis(cyclopentadienyl)zirkoniumdichlorid,
Bis(indenyl)zirkoniumdichlorid,
Bis(methylcyclopentadienyl)zirkoniumdichlorid,
Bis(n-butylcyclopentadienyl)zirkoniumdichlorid,
Bis(octadecylcyclopentadienyl)zirkoniumdichlorid,
Bis(pentamethylcyclopentadienyl)zirkoniumdichlorid,
Bis(trimethylsilylcyclopentadienyl)zirkoniumdichlorid,
Biscyclopentadienylzirkoniumdibenzyl,
Biscyclopentadienylzirkoniumdimethyl,
Bistetrahydroindenylzirkoniumdichlorid,
Dimethylsilyl-9-fluorenylcyclopentadienylzirkoniumdichlorid,
Dimethylsilyl-bis-1-(2,3,5-trimethylcyclopentadienyl)zirkoniumdichlorid,
Dimethylsilyl-bis-1-(2,4-dimethyl-cyclopentadienyl)zirkoniumdichlorid,
Dimethylsityl-bis-1-(2-methyl-4,5-benzoindenyl)zirkoniumdichlorid,
Dimethylsilyl-bis-1-(2-methyl-4-ethylindenyl)zirkoniumdichlorid,
Dimethylsilyl-bis-1-(2-methyl-4-i-propylindenyl)zirkoniumdichlorid,
Dimethylsilyl-bis-1-(2-methyl-4-phenylindenyl)zirkoniumdichlorid,
Dimethylsilyl-bis-1-(2-methyl-indenyl)zirkoniumdichlorid,
Dimethylsilyl-bis-1-(2-methyltetrahydroindenyl)zirkoniumdichlorid,
Dimethylsilyl-bis-1-indenylzirkoniumdichlorid,
Dimethylsilyl-bis-1-indenylzirkoniumdimethyl,
Dimethylsilyl-bis-1-tetrahydroindenylzirkoniumdichlorid,
Diphenylmethylen-9-fluorenylcyclopentadienylzirkoniumdichlorid,
Diphenylsilyl-bis-1-indenylzirkoniumdichlorid,
Ethylen-bis-1-(2-methyl-4,5-benzoindenyl)zirkoniumdichlorid,
Ethylen-bis-1-(2-methyl-4-phenylindenyl)zirkoniumdichlorid,
Ethylen-bis-1-(2-methyl-tetrahydroindenyl)zirkoniumdichlorid,
Ethylen-bis-1-(4,7-dimethyl-indenyl)zirkoniumdichlorid,
Ethylen-bis-1-indeny(zirkoniumdichlorid,
Ethylen-bis-1-tetrahydroindenylzirkoniumdichlorid,
Indenyl-cyclopentadienyl-zirkoniumdichlorid
Isopropyliden(1-indenyl)(cyclopentadienyl)zirkoniumdichlorid,
Isopropyliden(9-fluorenyl)(cyclopentadienyl)zirkoniumdichlorid,
Phenyimethylsilyl-bis-1-(2-methyl-indenyl)zirkoniumdichlorid,
sowie jeweils die Alkyl- oder Aryl-Derivate dieser Metallocendichloride.

Zur Aktivierung der Einzentren-Katalysatorsysteme werden geeignete Cokatalysatoren eingesetzt. Geeignete Cokatalysatoren für Metallocene der Formel I sind aluminiumorganische Verbindungen, insbesondere Alumoxane oder auch aluminiumfreie Systeme wie R²⁰ₓNH₄₋ₓBR²¹₄, R²⁰ₓPH₄₋ₓBR²¹₄, R²⁰₃CBR²¹₄ oder BR²¹₃. In diesen Formeln bedeutet x eine Zahl von 1 bis 4, die Reste R²⁰ sind gleich oder verschieden, bevorzugt gleich, und bedeuten C₁-C₁₀-Alkyl oder C₆-C₁₈-Aryl oder zwei Reste R²⁰ bilden zusammen mit dem sie verbindenden Atom einen Ring, und die Reste R²¹ sind gleich oder verschieden, bevorzugt gleich, und stehen für C₆-C₁₈-Aryl, das durch Alkyl, Haloalkyl oder Fluor substituiert sein kann. Insbesondere steht R²⁰ für Ethyl, Propyl, Butyl oder Phenyl und R²¹ für Phenyl, Pentafluorphenyl, 3,5-Bis-trifluormethylphenyl, Mesityl, Xylyl oder Tolyl.

Zusätzlich ist häufig eine dritte Komponente erforderlich, um einen Schutz von polaren Katalysator-Giften aufrecht zu erhalten. Hierzu sind aluminiumorganische Verbindung wie z.B. Triethylaluminium, Tributylaluminium und andere sowie Mischungen geeignet.

Je nach Verfahren können auch geträgerte Einzentren-Katalysatoren zur Verwendung kommen. Bevorzugt sind Katalysatorsysteme, bei welchen die Restgehalte von Trägermaterial und Cokatalysator eine Konzentration von 100 ppm im Produkt nicht überschreiten.

Hierbei wurden die Schmelzviskositäten nach DIN 53019 mit einem Rotationsviskosimeter, die Tropfpunkte nach DIN 51801/2, die Erweichungspunkte Ring/Kugel nach DIN EN 1427 bestimmt. Die Tropfpunktbestimmung erfolgt mit einem Tropfpunktgerät nach Ubbelohde gemäß DIN 51801/2, der Erweichungspunkt Ring/Kugel nach DIN EN 1427.

Die erfindungsgemäßen Zusammensetzungen können wie bereits vorher erwähnt zusätzlich noch Füllstoffe wie Silikate, Kieselsäuren, Zeolithe, wie Aluminiumsilikate, Natriumsilikate, Calciumsilikate, Kreide, Talkum, oder auch Hilfsstoffe, wie Antistatika, Stearate, Antioxidantien, Slipmittel und/oder Suspensionsstabilisatoren, Farbmittel, Flammschutzmittel, Antiblockmittel, Kali und Erdkali-Oxide, enthalten.

Als Treibmittel kommen zum Beispiel Azodicarbonamide, Nitrosoverbindungen, Hydrazide und Citronensäure sowie Citronensäurederivate, -salze und -ester, Natriumhydrogencarbonat oder Mischungen daraus in Einsatz. Am häufigsten werden sogenannte modifizierte Azodicarbonamide eingesetzt, das sind Azodicarbonamide in Verbindung mit Kickern, wie ZnO, Zinkstearat, oder Bleisalzen. Möglich sind aber auch Kombinationen mit organischen Substanzen, wie Säuren und Basen. Andere exotherme Treibmittel wären 4,4'-Oxybis (Benzolsulfonylhydarzid), 5-Phenyltetrazol, p-Toluylensulfonylsemicarbazid oder p-Toluylensulfonylhydrazid, die vorteilhaft zum Einsatz kommen können. Eine weitere Möglichkeit für Treibmittel sind leicht siedende Flüssigkeiten, wie Isopentan oder Isooctan, sowie mit Gasen oder leicht siedenden Flüssigkeiten gefüllte Microsphären mit polymerer Hülle.

Der erforderliche Anteil an Metallocenwachsen ist abhängig von der Additiv-Matrix-Wechselreaktion, von der Oberflächenstruktur des Treibmittels, von der Oberflächenstruktur des Fertigartikels, von der gewünschten Zellstruktur, von der Starttemperatur (Entgasungstemperatur) des eingesetzten Treibmittels sowie von der gewünschten Endprodukt-Einsatzmenge.

Die vorliegende Erfindung betrifft auch ein Verfahren zum Herstellen der erfindungsgemäßen Zusammensetzung durch Zusammengeben der Einzelbestandteile und anschließender Homogenisierung im Extruder oder Kneter. Das Vormischen der Einzelkomponenten ist dabei bei der Herstellung der Zusammensetzung bevorzugt und kann in einer geeigneten Mischapparatur erfolgen. Gegebenenfalls können aber auch weitere Additive erst später über eine Seitendosierung in fester oder flüssiger Form zugegeben werden

Die eingesetzten Rohstoffe können in verschiedenster Form vorliegen. Die Wachse, wie auch die weiteren Zusatzstoffe und Additive können z.B. als Granulat, Schuppe, Pulver oder Feinstpulver in der Mischung enthalten sein, während die Treibmittel zusätzlich auch noch in flüssig Form vorliegen können.

Für die Herstellung von staubfreien, granulat- und pulverförmigen hochgeladenen Wirkstoffzusammensetzungen sind zurzeit folgende einstufige oder mehrstufige Verfahren bekannt:
Es können alle Komponenten kalt gemischt werden und die Zugabe erfolgt über den Haupteinzug eines Extruders oder die wachsartigen / polymeren Formulierungsanteile werden über den Haupteinzug des Extruders zugeführt, die pulverförmigen oder flüssigen Treibmittel werden über entsprechende Seitenbeschickungen in die Maschine eingebracht. Im Anschluss daran kann eine Schmelzemischung in einem geeigneten Extruder oder in Knetern durchgeführt werden. Daran schließt sich eine Granulierung, Vermahlung oder Versprühung an.

Eine Kaltmischung besteht aus geeigneten Polymerträgem, wie beispielsweise Polyethylen, Polypropylen oder Ethylenvinylacet. Der Nachteil solcher Polymermischungen ist die oft begrenzte Verträglichkeit einzelner Komponenten, wobei es zu einer Separierung von Polymer und den Zusatzstoffen wie den Treibmitteln kommen kann.

Bei der Mischung bei erhöhter Temperatur kann die Wärmeenergie über Friktion, über separate Aufheizung des Mischtroges oder auf beide Weisen eingebracht werden.

Bei der Herstellung der Zusammensetzung auf dem Extruder wird vorzugsweise mit einem auf den hohen Wirkstoffgehalt abgestimmten Schneckenaufbau gearbeitet. Das Temperaturprofil ist vorzugsweise niedriger als im der Stand der Technik angegeben. Zur Herstellung der erfindungsgemäßen Zusammensetzungen wird vorteilhaft eine Stranggranulierung eingesetzt, eine Unterwassergranulierung oder Heißabschlag kann aber auch zum Einsatz kommen.

Die erfndungsgemäßen Zusammensetzungen führen bei teilsynthetischen oder synthetischen Polymeren zu einer Dichteverringerung und werden daher insbesondere für die Herstellung von geschäumten Kunststoffen oder Kunststoffgegenständen verwendet.

Im Gegensatz zu den im Stand der Technik beschrieben Treibmittel enthaltenden Zusammensetzungen können mit dem erfindungsgemäßen Produkten eine breite Auswahl von Polymeren geschäumt werden. Als Beispiele zu nennen sind : Polyolefine und Copolymere des PE, Polyvinylchlorid (PVC) als Hart-PVC oder als weichgemachtes PVC, Ethylen-Vinylacetat-Copolymere (EVA), Polystyrol (PS), Styrol-Acrylnitril-Copolymere (SAN), Acrylnitril-Butadien-Styrol-Copolymere (ABS), Poly-ethylenglykol-terephthalat (PET), Poly-butylenglykol-terephthalat (PBT) und deren Copolyester, Polycarbonat (PC), Kautschuk, Butylkautschuk, Bitumen sowie Blends wie PC/ABS (Acrylnitril-Styrol-Acrylat-Terpolymer), PC/PBT oder PC/ASA und PMMA (Polymethylmethacrylat), sowie thermoplastische Polyurethane (TPU) sowie einige Sonderpolymere.

Nach Abmischung mit dem Polymer und Erreichung der erforderlichen Sollkonzentration können die Kunststoffmischungen dann zu den gewünschten Endprodukten weiterverarbeitet werden.

### Ausführungsbeispiele

In den nachfolgenden Ausführungsbeispielen wurde jeweils ein Metallocenwachs oder ein Metallocenwachsgemisch, hergestellt aus den Metallocen-PP Wachsen, polar bzw. unpolaren Nicht-Metallocen-PE Wachsen und Copolymeren des Ethylens, mit folgenden Stoffparametern eingesetzt (siehe unten). Der Einsatz der Produkte erfolgt in feinkörnigem Zustand.

Die erfindungsgemäß eingesetzten, in Tabelle 1 aufgeführten Polyolefine a)-d) wurden durch Copolymerisation von Propylen mit Ethylen mit dem Metallocenkatalysator Dimethylsilylbisindenylzirkoniumdichlorid nach dem in EP-A-0 384 264 angegebenen Verfahren (allgem. Vorschrift Beispiele 1 bis 16) hergestellt. Die unterschiedlichen Erweichungspunkte und Viskositäten wurden durch Variation des Ethyleneinsatzes und der Polymerisationstemperatur eingestellt.

**Tabelle 1: Eingesetzte Polyolefine**

| | Polyolefin a) | Polyolefin b) | Polyolefin c) | Polyolefin d) |
|---|---|---|---|---|
| Erweichungs-/ Tropfpunkt (°C) | 83¹⁾ | 92²⁾ | 93²⁾ | 102²⁾ |
| Viskosität bei 170°C (mPa·s) | 280 | 2900 | 7900 | 9800 |

| | | | | |
|---|---|---|---|---|
| ¹⁾ Tropfpunkt ²⁾ Erweichungspunkt | | | | |

Oxidiertes, polares PE-Wachs a) oder unpolares PE-Wachs b):

| | Tropfpunkt [°C] | Viskosität bei 120°C [mPa·s] | Säurezahl [mg KOH/g] | Dichte [g/cm³] |
|---|---|---|---|---|
| a) | ca. 105 | ca. 300 | 17 | 0,92 |
| b) | ca. 118 | ca. 650 | 0 | 0,92 |

Copolymer des Ethylens:

| Erweichungspunkt [°C] | Schmelzpunkt [°C] | Viskosität MFR 190°C/2,16 kg | Comonomer Et-Acrylat % | Dichte [g/cm³] |
|---|---|---|---|---|
| ca. 50 - 60 | ca. 70 - 110 | ca. 0,5 - 500 g/10 min | ca. 9 - 25 | ca. 0,94 |

Der Einsatz erfolgt in feinkörnigem Zustand (gesprüht oder gemahlen), aber auch Granulatform ist möglich (bei getrennter Zugabe der Einzelkomponenten an der Maschine).

Die erfindungsgemäßen Wirstoffzusammensetzungen wurden wie nachfolgend beschrieben hergestellt:
Als Mischung für die Extrusion:

| | |
|---|---|
| Mischer: | Henschelmischer, Inhalt 5 Liter |
| Ansatz: | entsprechend den nachstehend aufgeführten Beispielen |
| Vormischen: | Ansatz ca. 2 bis 4 min. bei U = 600 /min |

Nachfolgend erfolgte die Extrusion auf einer gleichlaufenden Doppelschnecke mit nachgeschalteter Stranggranulierung.
Granulatgröße im Durchmesser 0,8 bis 3 mm.

Oder für den Einsatz als staubfreie Mischungen:

| | |
|---|---|
| Mischer: | Heiz- Kühlmischkombination, Inhalt 5 Liter |
| Ansatz: | entsprechend den nachstehend aufgeführten Beispielen |
| Vormischen: | Ansatz ca. 2 min. bei U = 350 /min |

Mischstufe 1) und 2) und Kühlphase

| | | |
|---|---|---|
| 1. Phase: | U = 3100 min⁻¹ | T=50°C-60°C |
| Mischzeit: | ca. 3 min bis 7 min | |
| 2. Phase: | U = 1500 min⁻¹ | T=65°C-85°C |
| Mischzeit: | ca. 2 min bis 3 min | |
| Kühlmischung: | auf 20 - 30 °C | |
| Mischzeit: | 5 min bis 10 min | |
| | bei U = 360 min⁻¹ | |

Der Energieeintrag erfolgte ausschließlich über Friktion. Die so entstandene Mischung hatte eine durchschnittliche Körnungsgröße von kleiner 1 mm.

### Herstellungsbeispiele 1 bis 4:

In den nachfolgenden Beispielen wurden nach vorstehend beschriebenem Verfahren folgende Präparationen hergestellt. Als Metallocenwachse wurde jeweils das vorstehende beschriebene Wachs eingesetzt:
1) 70 Gew.-% Hydrocerol CF (Zersetzungstemperatur ca. 125°C),
   20 Gew.-% Metallocenwachs c)
   10 Gew.-% oxidiertes PE-Wachs a)
2) 70 Gew.-% Hydrocerol CF (Zersetzungstemperatur ca. 125°C)
   20 Gew.-% Metallocenwachs d)

   10 Gew.-% unpolares PE Wachs b)
3) 70 Gew.-% Hydrocerol CF (Zersetzungstemperatur ca. 125°C)
   30 Gew.-% Metallocenwachs b)
4) 70 Gew.-% Hydrocerol CF (Zersetzungstemperatur 125°C)
   20 Gew.-% Metallocenwachs a)
   10 Gew.-% Copolymer des Ethylens

### Anwendungsbeispiele:

Die Wirkstoffzusammensetzungen gemäß den Herstellungsbeispielen 1 bis 4 wurden kalt angebatcht und in einer gleichlaufenden Doppeischnecke mit einem niederen Temperaturbild in unterschiedlichen Polymeren zu deren Dichteverringerung verwendet. Als Ergebnis war eine homogene Schaumstruktur zu beobachten, wobei gleichzeitig eine nachteilige Beeinträchtigung der mechanischen Eigenschaften der Polymere durch den Einsatz der Präparationen nicht gefunden wurde.

## Patentansprüche

1. Wirkstoffzusammensetzung enthaltend
i) ein oder mehrere fein verteilte Treibmittel,
ii) ein oder mehrere Metallocen-Polyolefinwachse,
iii) optional ein oder mehrere Wachse ausgewählt aus polaren und unpolaren Nicht-Metallocen-Polyolefinwachsen und
iv) gegebenenfalls ein oder mehrere Homo- und/oder Copolymere des Ethylens und/oder Propylens,
wobei das Treibmittel in einer Menge von wenigstens 5 bis 90 Gew.-% und das Polyolefinwachs ii) zu mindestens 10 Gew.% in der Zusammensetzung enthalten sind und wobei das Metallocen-Polyolefinwachs ein Copolymerwachs aus Propylen und 0,1 bis 50 Gew.-% Ethylen oder 0,1 bis 50 Gew.-% mindestens eines verzweigten oder unverzweigten 1-Alkens mit 4 bis 20 C-Atomen mit einem Tropfpunkt (Ring/Kugel) zwischen 80 und 170 °C, bestimmt nach DIN 51801/2, ist, wobei die Wirkstoffzusammensetzung durch Extrusion compoundiert wird,
wobei die Metallocen-Polyolefinwachse eine Schmelzviskosität DIN 53019, gemessen bei einer Temperatur von 170 °C mit einem Rotationsviskosimeter, im Bereich von 40 bis 80 000 mPa·s aufweisen, und wobei alle wachsartigen Bestandteile der Wirksoffzusammensetzung im Temperaturbereich zwischen 80 und 170 °C schmelzen.

2. Zusammensetzung nach Anspruch 1, **dadurch gekennzeichnet, dass** die Wachse bzw. die Homo- und/oder Copolymere des Ethylens und/oder Propylens der Komponenten ii), iii) und iv) bei einer Temperatur im Bereich von 80 bis 170 °C schmelzen.

3. Zusammensetzung nach einem oder mehreren der Ansprüche 1 bis 2 **dadurch gekennzeichnet, dass** das Metallocen-Polyolefinwachs einen Tropfpunkt im Temperaturbereich zwischen 80 und 170 °C besitzt und eine Schmelzviskosität, gemessen bei einer Temperatur von 170 °C, im Bereich von 45 bis 35 000 mPa·s.

4. Zusammensetzung nach einem oder nach mehreren der Ansprüche 1 bis 3, **dadurch gekennzeichnet, dass** diese 7 bis 80 Gew.-% eines Metallocen-Polyolefinwachses, 0 bis 30 Gew.-% eines oder mehrerer Nicht-Metallocenewachse und/oder Homo- und/oder Copolymere des Ethylens und/oder Propylen, 5 bis 90 Gew.-% eines oder mehrerer Treibmittel, und 0 bis 30 Gew.-% übliche Füllstoffe oder Additive enthält.

5. Zusammensetzung nach einem oder nach mehreren der Ansprüche 1 bis 4, **dadurch gekennzeichnet, dass** die Treibmittel aus organischen und anorganischen Produkten ausgewählt sind.

6. Zusammensetzung nach einem oder nach mehreren der Ansprüche 1 bis 5, **dadurch gekennzeichnet, dass** diese ein oder mehrere endotherme oder exotherme Treibmittel enthält, ausgewählt aus der Gruppe umfassend Azodicarbonamide, Nitrosoverbindungen, Hydrazide und Citronensäuren sowie Citronensäurederivate,-salze und -ester und Natriumhydrogencarbonat oder Mischungen daraus, sowie mit Gasen oder leicht siedenden Flüssigkeiten wie Isopentan oder Isooctan, gefüllte Microsphären mit polymerer Hülle.

7. Zusammensetzung nach einem oder nach mehreren der Ansprüche 1 bis 6, **dadurch gekennzeichnet, dass** diese als Treibmittel modifizierte Azodicarbonamide, vorzugsweise Azodicarbonamide in Verbindung mit Kickern, wie ZnO, Zinkstearat, oder Bleisalzen enthält oder dass es als Treibmittel Kombinationen mit organischen Substanzen, wie Säuren und Basen oder andere exotherme Treibmittel wie 4,4'-Oxybis (Benzolsulfonylhydrazid), 5-Phenyltetrazol, p-Toluylensulfonylsemicarbazid oder p-Toluylensulfonylhydrazid enthält.

8. Zusammensetzung nach einem oder nach mehreren der Ansprüche 1 bis 7, **dadurch gekennzeichnet, dass** diese ein oder mehrere Nicht-Metallocen-Polyolefinwachse ausgewählt aus oxidierten und nicht oxidierten Wachsen enthält, die einen Tropfpunkt unter 135 °C und eine Viskosität von kleiner als 30 000 mPa·s, gemessen bei 140 °C, besitzen.

9. Zusammensetzung nach einem oder nach mehreren der Ansprüche 1 bis 9, **dadurch gekennzeichnet, dass** diese eine sehr gute Verträglichkeit mit Polymeren besitzt, insbesondere mit Polymeren aus der Gruppe: Polyolefine, Ethylen-Vinylacetat-Copolymeren (EVA), Polystyrol (PS), Styrol-Acrylnitril-Copolymere (SAN), Acrylnitril-Butadien-Styrol-Copolymere (ABS), Polyvinylchlorid (PVC), Polyamid (PA), Poly-ethylenglykol-terephthalat (PET), Poly-butylenglykol-terephthalat (PBT) und deren Copolyestern sowie Polycarbonat (PC) sowie einige Sonderpolymere.

10. Verfahren zum Herstellen einer Zusammensetzung nach einem oder nach mehreren der Ansprüche 1 bis 9, **dadurch gekennzeichnet, dass** die Einzelkomponenten kalt gemischt werden und anschließend die Homogenisierung der Einzelbestandteile in einem Extruder oder Kneter erfolgt.

11. Verfahren nach Anspruch 10, **dadurch gekennzeichnet, dass** die Edukte als Granulat, Schuppen, Pulver oder als Feinkornmischung eingesetzt werden.

12. Verfahren nach Anspruch 10 und/oder 11, **dadurch gekennzeichnet, dass** die Treibmittel auch in flüssiger Form eingesetzt werden können.

13. Verfahren nach mindestens einem der vorhergehenden Ansprüche 10 bis 12, **dadurch gekennzeichnet, dass** im Anschluss an die Homogenisierung eine Granulierung über Strang- und Kopfgranulierung oder über Heißabschlag oder Unterwassergranulierung erfolgt.

14. Verwendung einer Zusammensetzunge nach einem oder nach mehreren der Ansprüche 1 bis 9 zum Herstellen von geschäumten Kunststoffteilen.

## Claims

1. An active ingredient composition comprising
i) one or more finely dispersed blowing agents,
ii) one or more metallocene polyolefin waxes,
iii) optionally one or more waxes selected from polar and nonpolar non-metallocene polyolefin waxes, and
iv)if appropriate, one or more homo- and/or copolymers of ethylene and/or of propylene,
where the composition comprises an amount of at least 5 to 90% by weight of the blowing agent and at least 10% by weight of the polyolefin wax ii), and where the metallocene polyolefin wax is a copolymer wax made of propylene and from 0.1 to 50% by weight of ethylene or from 0.1 to 50% by weight of at least one branched or unbranched 1-alkene having from 4 to 20 carbon atoms with drop point (ring and ball) from 80 to 170°C, determined to DIN 51801/2, where the active ingredient composition is compounded by extrusion, where the DIN 53019 melt viscosity of the metallocene polyolefin waxes, measured at a temperature of 170°C by a rotary viscometer, is in the range from 40 to 80 000 mPa·s, and where all of the waxy constituents of the active ingredient composition melt in the temperature range from 80 to 170°C.

2. The composition as claimed in claim 1, wherein the waxes and, respectively, the homo- and/or copolymers of ethylene and/or propylene of components ii), iii), and iv) melt at a temperature in the range from 80 to 170°C.

3. The composition as claimed in one or more of claims 1 to 2, wherein the drop point of the metallocene polyolefin wax is in the temperature range from 80 to 170°C and its melt viscosity, measured at a temperature of 170°C, is in the range from 45 to 35 000 mPa·s.

4. The composition as claimed in one or more of claims 1 to 3, which comprises from 7 to 80% by weight of a metallocene polyolefin wax, from 0 to 30% by weight of one or more non-metallocene waxes, and/or homo- and/or copolymers of ethylene and/or propylene, from 5 to 90% by weight of one or more blowing agents, and from 0 to 30% by weight of conventional fillers or additives.

5. The composition as claimed in one or more of claims 1 to 4, wherein the blowing agents have been selected from organic and inorganic products.

6. The composition as claimed in one or more of claims 1 to 5, which comprises one or more endothermic or exothermic blowing agents, selected from the group consisting of azodicarbonamides, nitroso compounds, hydrazides, and citric acids, and also citric acid derivatives, citric acid salts and citric acid esters, and sodium hydrogencarbonate, or a mixture thereof, or else comprises microspheres which have a polymeric shell and which have a filling of gases or of low-boiling-point liquids, such as isopentane or isooctane.

7. The composition as claimed in one or more of claims 1 to 6, which comprises, as blowing agent, modified azodicarbonamides, preferably azodicarbonamides in conjunction with kickers, such as ZnO, or zinc stearate, or with lead salts, or which comprises, as blowing agent, a combination with organic substances, e.g. acids and bases, or comprises other exothermic blowing agents, e.g. 4,4'-oxybis(benzenesulfonyl hydrazide), 5-phenyltetrazole, p-tolylenesulfonyl semicarbazide, or p-tolylenesulfonyl hydrazide.

8. The composition as claimed in one or more of claims 1 to 7, which comprises one or more non-metallocene polyolefin waxes selected from oxidized and non-oxidized waxes whose drop point is below 135°C and whose viscosity is smaller than 30 000 mPa·s, measured at 140°C.

9. The composition as claimed in one or more of claims 1 to 8, which has very good compatibility with polymers, in particular with polymers from the group of: polyolefins, ethylene-vinyl acetate copolymers (EVA), polystyrene (PS), styrene-acrylonitrile copolymers (SAN), acrylonitrile-butadiene-styrene copolymers (ABS), polyvinyl chloride (PVC), polyamide (PA), polyethylene glycol terephthalate (PET), polybutylene glycol terephthalate (PBT), and copolyesters of these, and also polycarbonate (PC), and also certain specialty polymers.

10. A process for the production of a composition as claimed in one or more of claims 1 to 9, which comprises cold-mixing the individual components and then homogenizing the individual components in an extruder or kneader.

11. The process as claimed in claim 10, wherein the starting materials are used in the form of pellets, flakes, or powders, or in the form of a
fine-grain mixture.

12. The process as claimed in claim 10 and/or 11, wherein the blowing agents can also be used in liquid form.

13. The process as claimed in at least one of the preceding claims 10 to 12, wherein, after the homogenization process, pelletization takes place by way of a hot-cut strand pelletizer or by way of a die-face pelletizer or underwater pelletizer.

14. The use of a composition as claimed in one or more of claims 1 to 9 for the production of foamed plastics parts.

## Revendications

1. Composition d'agent actif, contenant
i) un ou plusieurs agents gonflants finement répartis,
ii) une ou plusieurs cires de polyoléfines métallocènes,
iii) éventuellement une ou plusieurs cires choisies parmi les cires de polyoléfines non métallocènes polaires et apolaires, et
iv) éventuellement un ou plusieurs homo- et/ou copolymères d'éthylène et/ou de propylène,
l'agent gonflant étant contenu en une quantité d'au moins 5 à 90 % en poids et la cire de polyoléfine ii) à hauteur d'au moins 10 % en poids dans la composition, et la cire de polyoléfine métallocène étant une cire de copolymère de propylène et 0,1 à 50 % en poids d'éthylène ou 0,1 à 50 % en poids d'au moins un 1-alcène ramifié ou non ramifié contenant 4 à 20 atomes C, ayant un point de goutte (anneau/cône) compris entre 80 et 170 °C, déterminé selon DIN 51801/2, la composition d'agent actif étant malaxée par extrusion, les cires de polyoléfines métallocènes présentant une viscosité à l'état fondu selon DIN 53019, mesurée à une température de 170 °C avec un viscosimètre rotatif, dans la plage allant de 40 à 80 000 mPa·s, et tous les constituants cireux de la composition fondant dans la plage de température comprise entre 80 et 170 °C.

2. Composition selon la revendication 1, **caractérisée en ce que** les cires ou les homo- et/ou copolymères d'éthylène et/ou de propylène des composants ii), iii) et iv) fondent à une température dans la plage allant de 80 à 170 °C.

3. Composition selon une ou plusieurs des revendications 1 à 2, **caractérisée en ce que** la cire de polyoléfine métallocène présente un point de goutte dans la plage de température comprise entre 80 et 170 °C et une viscosité à l'état fondu, mesurée à une température de 170 °C, dans la plage allant de 45 à 35 000 mPa·s.

4. Composition selon une ou plusieurs des revendications 1 à 3, **caractérisée en ce que** celle-ci contient 7 à 80 % en poids d'une cire de polyoléfine métallocène, 0 à 30 % en poids d'une ou de plusieurs cires non métallocènes et/ou d'homo- et/ou de copolymères d'éthylène et/ou de propylène, 5 à 90 % en poids d'un ou de plusieurs agents gonflants, et 0 à 30 % en poids de charges ou d'additifs usuels.

5. Composition selon une ou plusieurs des revendications 1 à 4, **caractérisée en ce que** les agents gonflants sont choisis parmi les produits organiques et inorganiques.

6. Composition selon une ou plusieurs des revendications 1 à 5, **caractérisée en ce que** celle-ci contient un ou plusieurs agents gonflants endothermes ou exothermes, choisis dans le groupe comprenant les azodicarbonamides, les composés nitroso, les hydrazides et les acides citriques, ainsi que les dérivés, sels et esters d'acides citriques, et l'hydrogénocarbonate de sodium ou leurs mélanges, ainsi que les microsphères à enveloppe polymère remplies avec des gaz ou des liquides volatils tels que l'isopentane ou l'isooctane.

7. Composition selon une ou plusieurs des revendications 1 à 6, **caractérisée en ce que** celle-ci contient en tant qu'agents gonflants des azodicarbonamides modifiés, de préférence des azodicarbonamides reliés à des stabilisants, tels que ZnO, le stéarate de zinc, ou des sels de plomb, ou **en ce qu'**elle contient en tant qu'agents gonflants des combinaisons avec des substances organiques, telles que des acides ou des bases ou d'autres agents gonflants exothermes tels que l'hydrazide de 4,4'-oxybis(benzènesulfonyle), le 5-phényltétrazole, le semi-carbazide de p-toluylènesulfonyle ou l'hydrazide de p-toluylènesulfonyle.

8. Composition selon une ou plusieurs des revendications 1 à 7, **caractérisée en ce que** celle-ci contient une ou plusieurs cires de polyoléfines non métallocènes choisies parmi les cires oxydées et non oxydées, qui présentent un point de goutte inférieur à 135 °C et une viscosité inférieure à 30 000 mPa·s, mesurée à 140 °C.

9. Composition selon une ou plusieurs des revendications 1 à 9, **caractérisée en ce que** celle-ci présente une très bonne compatibilité avec les polymères, notamment avec les polymères du groupe constitué par les polyoléfines, les copolymères d'éthylène-acétate de vinyle (EVA), le polystyrène (PS), les copolymères de styrène-acrylonitrile (SAN), les copolymères d'acrylonitrile-butadiène-styrène (ABS), le polychlorure de vinyle (PVC), le polyamide (PA), le polytéréphtalate d'éthylène glycol (PET), le polytéréphtalate de butylène glycol (PBT) et leurs copolyesters, ainsi que le polycarbonate (PC) et certains polymères particuliers.

10. Procédé de fabrication d'une composition selon une ou plusieurs des revendications 1 à 9, **caractérisé en ce que** les composants individuels sont mélangés à froid, puis l'homogénéisation des constituants individuels a lieu dans une extrudeuse ou un malaxeur.

11. Procédé selon la revendication 10, **caractérisé en ce que** les réactifs sont utilisés sous la forme d'un granulat, de paillettes, d'une poudre ou d'un mélange de fines.

12. Procédé selon la revendication 10 et/ou 11, **caractérisé en ce que** les agents gonflants peuvent également être utilisés sous forme liquide.

13. Procédé selon au moins l'une quelconque des revendications 10 à 12 précédentes, **caractérisé en ce qu'**une granulation par granulation à joncs et en tête ou par fractionnement à chaud ou par granulation sous l'eau a lieu après l'homogénéisation.

14. Utilisation d'une composition selon une ou plusieurs des revendications 1 à 9 pour la fabrication de parties en plastique moussées.
